# EUROPÄISCHE PATENTSCHRIFT

(11) **EP 2 236 926 B1**
(45) Veröffentlichungstag und Bekanntmachung des Hinweises auf die Patenterteilung: **29.07.2015**
(21) Anmeldenummer: 10154234.8
(22) Anmeldetag: 22.02.2010
(51) Int. Cl.: F23N 5/02, F23N 5/14, G01K 1/16, G01K 13/02

(54) **Temperaturmessvorrichtung, Gasturbine mit einer Temperaturmessvorrichtung und Verfahren zum direkten Bestimmen der Temperatur in einer Brennkammer**
Temperature measuring device, gas turbine with same and method for directly determining the temperature in a combustion chamber
Dispositif de mesure de la température, turbine à gaz dotée d'un dispositif de mesure de la température et procédé de détermination directe de la température dans une chambre de combustion

(30) Priorität: 17.03.2009 DE 102009013595
(43) Veröffentlichungstag der Anmeldung: 06.10.2010
(73) Patentinhaber: Siemens Aktiengesellschaft, 80333 München (DE)
(72) Erfinder: Hein, Olaf, 45481 Mülheim an der Ruhr (DE); Minne, Michael, 46562 Voerde (DE)

(56) Entgegenhaltungen:
- EP-A1- 0 949 492
- WO-A1-2007/093162
- US-A1- 2004 079 070

## Beschreibung

Die vorliegende Erfindung betrifft eine Temperaturmessvorrichtung zum Messen der Temperatur in einem Verbrennungssystem, insbesondere in einer Gasturbinenbrennkammer. Daneben trifft die Erfindung eine Gasturbine mit einem eine Temperaturmessvorrichtung umfassenden Verbrennungssystem. Schließlich betrifft die Erfindung ein Verfahren zum direkten Bestimmen der Temperatur in einer Brennkammer, insbesondere in einer Gasturbinenbrennkammer.

Bisher erfolgt das Ermitteln der Temperatur im Verbrennungssystem einer Gasturbine, etwa in einer Gasturbinenbrennkammer, in der Regel durch eine Temperaturmessung am Austritt der Turbine. Aus der gemessenen Turbinenaustrittstemperatur wird dann die Temperatur in der Brennkammer unter Berücksichtigung der Entspannung und der Abkühlung, welche die heißen Verbrennungsgase in der Turbine erfahren, berechnet. Ein direktes Messen der Temperatur in der Brennkammer erfolgt bislang nicht, da die verwendeten Temperaturfühler in dem Temperaturbereich, der in der Brennkammer herrscht, nicht betrieben werden können.

Die Temperatur in der Brennkammer ist jedoch eine Größe, die zur Regelung der Brennstoffmenge, welche der Verbrennung zugeführt wird, herangezogen wird. Während die Temperaturmessung am Turbinenaustritt für die Regelung einer einstufigen Verbrennung noch hinreichende Rückschlüsse auf die Temperatur in der Brennkammer zulässt, ist im Falle einer zweistufigen sequentiellen Verbrennung, wie sie bspw. in US 6,050,078 beschrieben ist, das genügend genaue Ermitteln der Temperatur in der stromaufwärts gelegenen Brennkammer sehr schwierig, wenn nicht gar unmöglich (siehe auch EP 0949492, das eine Methode beschreibt, mithilfe eines Maschinenmodells aus der gemessenen Temperatur bereits mit kühlem Gas gemischtem heißen Gas auf die Temperatur in der Brennkammer zu schließen). Daher ist die Regelung einer zweistufigen sequentiellen Verbrennung auf der Basis der Turbinenaustrittstemperatur bisher nicht zufriedenstellend gelöst. Dies gilt insbesondere dann, wenn zwischen der stromauf gelegenen Brennkammer und der stromab gelegenen Brennkammer eine Turbinenstufe angeordnet ist, wie dies beispielsweise in US 5,577,378 beschrieben ist.

Aufgabe der vorliegenden Erfindung ist es daher, eine Temperaturmessvorrichtung zu schaffen, mit der sich die Unsicherheiten beim Ermitteln der in einem Verbrennungssystem, bspw. einer Gasturbinenbrennkammer, herrschenden Temperatur verringern lassen. Es ist eine zweite Aufgabe der vorliegenden Erfindung, eine vorteilhafte Gasturbine zur Verfügung zu stellen. Eine dritte Aufgabe der vorliegenden Erfindung ist es, ein vorteilhaftes Verfahren zum Bestimmen der Temperatur in einem Verbrennungssystem, bspw. in einer Gasturbinenbrennkammer, zur Verfügung zu stellen.

Die erste Aufgabe wird durch eine Temperaturmessvorrichtung nach Anspruch 1 gelöst, die zweite Aufgabe durch eine Gasturbine nach Anspruch 8 und die dritte Aufgabe durch ein Verfahren nach Anspruch 14. Die abhängigen Ansprüche enthalten vorteilhafte Ausgestaltungen der Erfindung.

Eine erfindungsgemäße Temperaturmessvorrichtung zum Messen der Temperatur in einem Verbrennungssystem umfasst ein in oder an dem Verbrennungssystem angeordnetes Wärmeaufnahmeelement, ein von dem Verbrennungssystem entfernt angeordnetes Messende mit daran angeordnetem, die Temperatur des Messendes erfassenden Temperatursensor und ein Wärmeleitelement, welches das Wärmeaufnahmeelement thermisch leitend mit dem Messende verbindet. Außerdem umfasst sie eine auf das Wärmeleitelement zur Wärmeabfuhr quantifizierbar einwirkende Kühleinrichtung. Das in einem Verbrennungssystem angeordnete Wärmeaufnahmeelement kann hierbei insbesondere flächig oder volumig ausgebildet sein. Ein flächiges Wärmeaufnahmeelement kann beispielsweise von einem Abschnitt einer heißgasführenden Wand des Verbrennungssystems gebildet sein. Ein volumiges Wärmeaufnahmeelement kann beispielsweise ein in das Verbrennungssystem hineinragendes Element sein. Unabhängig davon, ob das Wärmeaufnahmeelement flächig oder volumig ausgebildet ist, kann es als eine integrale Fläche oder ein integraler Abschnitt des Wärmeleitelementes ausgebildet sein. Dadurch ist eine besonders gute Übertragung der Wärme vom Wärmeaufnahmeelement an das Wärmeleitelement möglich, die jedoch im Rahmen der Erfindung nicht zwingend notwendig ist. Das Verbrennungssystem kann insbesondere eine Gasturbinenbrennkammer oder eine Anzahl von sequentiell durchströmten Brennkammern umfassen, wobei das Wärmeaufnahmeelement in einer Brennkammer oder einem Strömungskanal zwischen zwei Brennkammern angeordnet ist.

Die erfindungsgemäße Temperaturmessvorrichtung ermöglicht ein Verfahren zum direkten Bestimmen der Temperatur in einem Verbrennungssystem, bspw. der Temperatur in einer Gasturbinenbrennkammer, in dem mittels des Wärmeaufnahmeelementes eine Wärmemenge aus dem Verbrennungssystem aufgenommen wird. Die aufgenommene Wärmemenge wird dann mittels des Wärmeleitelements an einen von dem Verbrennungssystem entfernt angeordneten Temperatursensor weitergeleitet, wobei während des Weiterleitens Wärme quantifizierbar aus der Wärmemenge abgeführt wird. Dies hat zur Folge, dass die am Temperatursensor ankommende Wärmemenge um einen quantifizierbaren Betrag gegenüber der aufgenommenen Wärmemenge vermindert ist. Die eigentliche Temperaturmessung erfolgt dann anhand der verminderten Wärmemenge. Die Abfuhr der Wärme und die damit verbundene Temperaturreduzierung am Ort des Temperatursensors ermöglichen dabei überhaupt erst die Temperaturmessung mittels des Temperatursensors. Auf der Basis der eigentlichen Temperaturmessung und der Menge der abgeführten Wärme wird dann schließlich die Temperatur im Verbrennungssystem, bspw. in der beispielhaft erwähnten Gasturbinenbrennkammer, ermittelt.

In der erfindungsgemäßen Vorrichtung bzw. in dem erfindungsgemäßen Verfahren ist es daher nicht nötig, den eigentlichen Temperatursensor den in dem Verbrennungssystem herrschenden hohen Temperaturen auszusetzen. Vielmehr wird lediglich das Wärmeaufnahmeelement diesen Temperaturen ausgesetzt und die aufgenommene Wärme anschließend an einer entfernten Temperatursensor weitergeleitet. Während der Weiterleitung der aufgenommenen Wärmemenge an das Messende wird soviel Wärme abgeführt, dass die Temperatur am Messende mit einem herkömmlichen Temperatursensor gemessen werden kann.

Die Wärmeabfuhr während des Weiterleitens der Wärme vom Wärmeaufnahmeelement an das Messende kann beispielsweise durch eine Kalibrierung im Zuge der Inbetriebnahme des Verbrennungssystems, bspw. bei der Inbetriebnahme einer Gasturbine, quantifiziert werden.

Außerdem ist es vorteilhaft, wenn wenigstens ein die Temperatur des Wärmeleitelements erfassender Temperatursensor am Wärmeleitelement selbst angeordnet ist. Dieser sollte vorzugsweise in einem Abschnitt des Wärmeleitelementes angeordnet sein, in dem die Temperatur bereits soweit abgesunken ist, dass herkömmliche Temperatursensoren zur Messung der Temperatur Verwendung finden können. Anhand der Temperaturmessung mit dem am Wärmeleitelement angeordneten Temperatursensor können dann Korrekturen vorgenommen werden, falls die Randbedingungen während des Betriebs des Verbrennungssystems, bspw. in der erwähnten Gasturbine, von denen während der Kalibrierphasen abweichen. Eine derartige Abweichung würde sich in einer Abweichung der am Wärmeleitelement gemessenen Temperatur von der während der Kalibrierphasen gemessenen Temperatur bemerkbar machen.

Als Kühleinrichtung kann insbesondere ein Kühlfluidkanal dienen, in dem das Wärmelement angeordnet ist. Ein solcher Kühlfluidkanal ist in vielen Verbrennungssystemen vorhanden, etwa in Form eines eine Wand des Verbrennungssystems zu Kühlungszwecken umgebenden Kühlfluidkanals. Solche Kühlfluidkanäle sind bei Gasturbinen in der Regel mit dem Verdichterausgang strömungstechnisch verbunden, so dass sie von Verdichterluft durchströmt werden. Wenn im Rahmen des erfindungsgemäßen Verfahrens das quantifizierbare Abführen der Wärme mittels eines solchen Kühlfluidstromes erfolgt, kann die abgeführte Wärmemenge beispielsweise auch aus der vom Kühlfluidstrom aufgenommenen Wärmemenge ermittelt werden. Gleichzeitig kann auch die Wärmeabfuhr aus dem Wärmeleitelement durch geeignetes Steuern oder Regulieren des Kühlfluidflusses geeignet eingestellt werden. Während unterschiedlicher Betriebszustände der Gasturbine auftretende unterschiedliche Verdichterluftströme können beim Kalibrierungsprozess berücksichtigt werden.

Um die Wärmeabfuhr aus dem Wärmeleitelement zu verbessern, kann dieses eine Geometrie mit großer Oberfläche aufweisen oder mit einem eine große Oberfläche aufweisenden Element, insbesondere mit Kühlrippen, thermisch leitend in Verbindung stehen. Kühlrippenähnliche Strukturen können aber auch direkt in die Oberfläche des Wärmeleitelementes zu deren Vergrößerung eingebracht sein.

Um das Wärmeaufnahmeelement selbst vor den in der Brennkammer herrschenden Temperaturen zu schützen und so seine Lebensdauer zu verlängern, kann es eine definiert wärmedämmende und/oder oxidationshemmende Beschichtung aufweisen, beispielsweise eine keramische Wärmedämmschicht. Der Grad der Wärmedämmung kann in dem Kalibrierungsverfahren ermittelt werden.

Es ist vorteilhaft, wenn das Wärmeleitelement und/oder das Wärmeaufnahmeelement aus einem hochtemperaturfesten Material, beispielsweise Wolfram, Rhenium, etc., oder aus einer Kombination solcher Materialien bestehen bzw. besteht.

Eine erfindungsgemäße Gasturbine weist wenigstens ein Verbrennungssystem auf, welches mit wenigstens einer erfindungsgemäßen Temperaturmessvorrichtung ausgestattet ist. Im Rahmen der erfindungsgemäßen Gasturbine kann das Wärmeleitelement der Temperaturmessvorrichtung insbesondere wenigstens teilweise in einem das Verbrennungssystem umgebenden kühlfluidführenden Bereich, beispielsweise einem Plenum oder einem Kühlluftkanal, angeordnet sein, so dass ein Abführen der Wärme mittels des Kühlfluidstroms erfolgen kann. Insbesondere kann der Verdichterausgang mit dem kühlfluidführenden Bereich strömungstechnisch verbunden sein, so dass das Kühlfluid durch Verdichterluft realisiert ist. Derartige Anordnungen sind heutzutage in Gasturbinen häufig anzutreffen, so dass die Wärmeabfuhr aus dem Wärmeleitelement ohne große konstruktive Änderungen an bestehenden Gasturbinen realisiert werden kann.

Wenn die Gasturbine ein Verbrennungssystem mit wenigstens zwei axial hintereinander angeordneten und sequentiell durchströmten Brennkammern umfasst, ist wenigstens die stromaufwärts gelegene Brennkammer mit wenigstens einer erfindungsgemäßen Temperaturmessvorrichtung ausgestattet. Während die Temperatur der stromabwärts gelegenen Brennkammer noch hinreichend zufriedenstellend aus der Temperatur am Turbinenaustritt ermittelt werden kann, gilt dies für die Temperatur in der stromaufwärts gelegenen Brennkammer nicht mehr. Es ist daher vorteilhaft, wenn zumindest die Temperatur dieser Brennkammer mittels einer erfindungsgemäßen Temperaturmessvorrichtung direkt ermittelt wird. Selbstverständlich ist es auch möglich, in beiden Brennkammern die Temperaturen mittels einer erfindungsgemäßen Temperaturmessvorrichtung zu bestimmen. Dies gilt insbesondere, wenn zwischen den beiden axial hintereinander angeordneten Brennkammern wenigstens eine Turbinenstufe angeordnet ist. Als weitere Alternative ist es auch möglich, die Temperatur in einem Strömungspfad zwischen den beiden Brennkammern zu messen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Fig. 1 zeigt ein erstes Ausführungsbeispiel für eine Gasturbine mit einer erfindungsgemäßen Temperaturmessvorrichtung.

Fig. 2 zeigt ein Detail aus Fig. 1.

Fig. 3 zeigt ein zweites Ausführungsbeispiel für die Gasturbine mit einer erfindungsgemäßen Temperaturmessvorrichtung.

Fig. 4 zeigt ein Detail aus Fig. 3.

Fig. 5 zeigt ein drittes Ausführungsbeispiel für eine Gasturbine mit einer erfindungsgemäßen Temperaturmessvorrichtung.

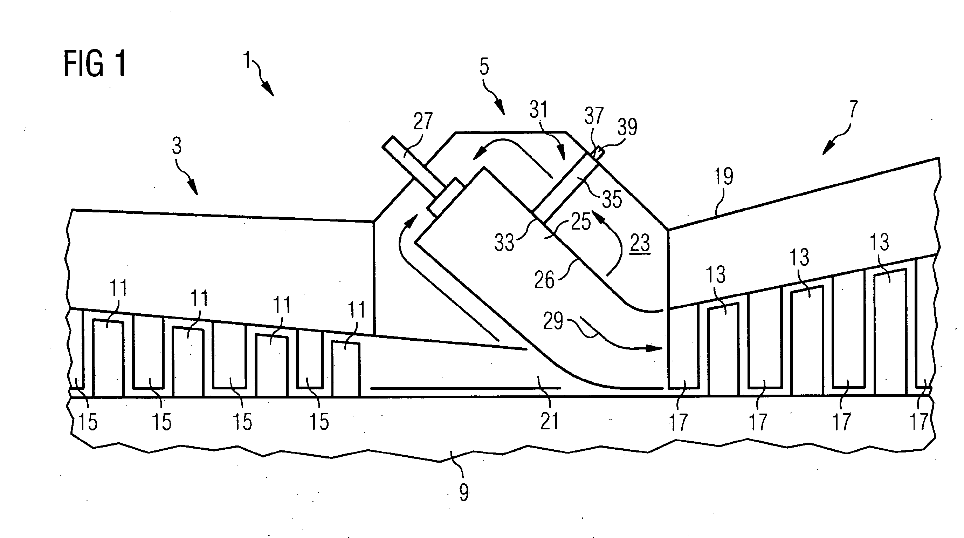

Figur 1 zeigt ein erstes Ausführungsbeispiel für eine Gasturbine 1 mit einer erfindungsgemäßen Temperaturmessvorrichtung in einem vereinfachten Längsschnitt. Die Gasturbine 1 umfasst einen Verdichterabschnitt 3, einen Brennkammerabschnitt 5 und einen Turbinenabschnitt 7.

Eine Welle 9 erstreckt sich durch alle Abschnitte der Gasturbine 1. Im Verdichterabschnitt 3 ist die Welle 9 mit Kränzen von Verdichterlaufschaufeln 11 und im Turbinenabschnitt 7 mit Kränzen von Turbinenlaufschaufeln 13 ausgestattet. Zwischen den jeweiligen Laufschaufelkränzen befinden sich im Verdichterabschnitt 3 Kränze von Verdichterleitschaufeln 15 und im Turbinenabschnitt 7 Kränze von Turbinenleitschaufeln 17. Die Leitschaufeln erstrecken sich vom Gehäuse 19 der Gasturbinenanlage 1 ausgehend im Wesentlichen in die Radialrichtung der Welle 9.

Der Brennkammerabschnitt 5 umfasst ein Brennkammerplenum 23 mit einem darin angeordneten Verbrennungssystem, welches im vorliegenden Ausführungsbeispiel wenigstens eine Brennkammer 25 umfasst. Über wenigstens einen an der Brennkammer 25 angeordneten Brenner 27 kann der Brennkammer 25 vom Verdichterabschnitt 3 komprimierte Luft - auch Verdichterluft genannt - sowie ein flüssiger oder ein gasförmiger Brennstoff zugeführt werden. Im vorliegenden Ausführungsbeispiel ist die Brennkammer 25 eine von einer Anzahl um die Welle 9 herum verteilter Rohrbrennkammern. Es ist aber auch möglich, die Brennkammer 25 als eine die Welle vollständig umschließende Ringbrennkammer auszugestalten.

Im Betrieb der Gasturbine 1 wird Luft durch einen Lufteinlass (nicht dargestellt) des Verdichterabschnittes 3 eingesaugt und von den Verdichterlaufschaufeln 11 komprimiert. Die Verdichterluft wird dann durch einen Verdichterausgang 21 dem Brennkammerplenum 23 zugeleitet. Von dort strömt sie über einen Brenner 27 in eine im Brennkammerplenum 23 angeordnete Brennkammer 25. Durch den Benner 27 wird außerdem ein gasförmiger oder flüssiger Brennstoff zugeführt, der mit der Verdichterluft vermischt wird. Das entstehende Luft-BrennstoffGemisch wird anschließend in der Brennkammer 25 verbrannt. Alternativ kann der Brennstoff auch direkt in die in der Brennkammer 25 befindliche Flamme eingedüst werden, ohne vorher mit Luft vermischt zu werden.

Die in der Brennkammer entstehenden heißen Verbrennungsabgase strömen entlang des Strömungspfades 29 von der Brennkammer 25 in den Turbinenabschnitt 7, wo sie expandieren und abkühlen und währenddessen Impuls auf die Turbinenlaufschaufeln 13 übertragen. Die Turbinenleitschaufeln 17 dienen dabei als Düsen zum Optimieren des Impulsübertrages auf die Laufschaufeln 13. Die durch den Impulsübertrag herbeigeführte Rotation der Welle 9 wird dazu genutzt, einen Verbraucher, beispielsweise einen elektrischen Generator, anzutreiben. Die entspannten und abgekühlten Verbrennungsgase werden schließlich durch einen Auslass (nicht dargestellt) aus der Gasturbine 1 abgeleitet.

Um die Temperatur in der Brennkammer 25 messen zu können, weist die Gasturbine 1 eine Temperaturmessvorrichtung 31 auf, die eine in der Brennkammer 25 angeordnete Wärmeaufnahmefläche 31, ein von der Wärmeaufnahmefläche 31 ausgehendes und sich durch das Brennkammerplenum 23 erstreckendes Wärmeleitelement 35 sowie einen an einem Messende 37 der Temperaturmessvorrichtung 31 angeordneten Temperatursensor 39, bspw. ein Thermoelement, umfasst. Die Wärmeaufnahmefläche 33 ist im vorliegenden Ausführungsbeispiel in die Brennkammerwand 26 integriert. Alternativ dazu kann statt einer Wärmeaufnahmefläche ein in die Brennkammer hineinragendes Wärmeaufnahmeelement vorhanden sein.

Im vorliegenden Ausführungsbeispiel ist die Wärmeaufnahmefläche 33 als eine Endfläche des Wärmeleitelementes 35 ausgebildet. Die Wärmeaufnahmefläche 33 kann insbesondere auch mit einer Wärmedämmschicht und/oder einer oxidationshemmenden Beschichtung versehen sein, wie sie typischerweise auch in den übrigen Abschnitten der Brennkammerwand 26 zur Anwendung kommt. Die Endfläche am anderen Ende des Wärmeleitelements 35 bildet das Messende 37 der Temperaturmessvorrichtung 31, an dem die eigentliche Temperaturmessung vorgenommen wird.

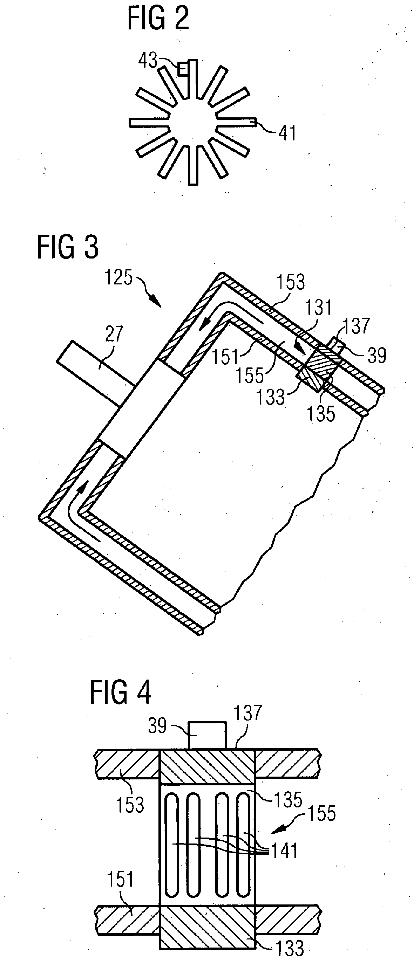

Das Wärmeaufnahmeelement 33 und das Wärmeleitelement 35 sind aus hochtemperaturfesten Materialien hergestellt. Geeignete hochtemperaturfeste Materialien sind bspw. Wolfram, Rhenium oder Kombinationen aus diesem Materialien. Zudem weist das Wärmeleitelement 35 eine Oberfläche auf, in der Kühlrippen 41 zur Vergrößerung der Oberfläche ausgebildet sind. Ein Querschnitt des Wärmeleitelementes 35 ist in Fig. 2 dargestellt. Anstatt die Kühlrippen 41 im Wärmeleitelement 35 selbst auszuformen, besteht auch die Möglichkeit, einen Kühlkörper an die Außenfläche des Wärmeleitelementes 35 anzubringen. Die zuerst genannte Variante hat jedoch den Vorteil, dass die Wärmeübertragung aufgrund fehlender Materialgrenzen gegenüber der Wärmeübertragung bei einem aufgesetzten Kühlkörper besser ist. Unabhängig von der gewählten Variante führt die vergrößerte Oberfläche des Wärmeleitelementes 35 jedoch zu einer verbesserten Wärmeübertragung an die vorbeiströmende Verdichterluft und damit zu einer erhöhten Kühlung des Wärmeleitelementes 35.

Während des Betriebs der Gasturbine strömt an den Wärmeleitelement 35 Verdichterluft vom Verdichterausgang 21 entlang zum Brenner 27. Dabei wird dem Wärmeleitelement 35 Wärme entzogen, so dass das Messende 37 kühler ist als die Wärmeaufnahmefläche 33. Die Abkühlung ist dabei groß genug, dass die Temperatur am Messende gegenüber der Temperatur an der Wärmeaufnahmefläche so weit verringert ist, dass konventionelle Temperatursensoren, beispielsweise Thermoelemente, die Temperatur dieser Fläche messen können.

Um aufgrund der Temperaturmessung am Messende 37 auf die Temperatur in der Brennkammer 25 rückschließen zu können, erfolgt während der Inbetriebnahme der Gasturbine, etwa während einer Erstinbetriebnahme oder einer Wiederinbetriebnahme, eine Kalibrierung. In dieser werden die Temperaturen in der Brennkammer in Abhängigkeit von dem Betriebszustand der Gasturbine und dem Messwert am Messende 37 ermittelt. Die ermittelten Temperaturen können dann zusammen mit den zugehörigen Messwerten und Betriebszuständen in einer Tabelle abgespeichert werden, die anschließend beispielsweise zur Steuerung der Brennstoffzufuhr zum Brenner 27 herangezogen wird. Um Korrekturen während des Betriebs der Gasturbine vornehmen zu können, die auf Abweichungen der Randbedingungen während des Betriebs von denen während des Kalibrierens zurückgehen, kann das Wärmeleitelement 35 mit einem oder mehreren Temperatursensoren 43, beispielsweise in Form von Thermoelementen, ausgestattet sein.

Ein zweites Ausführungsbeispiel für eine Gasturbine mit einer erfindungsgemäßen Temperaturmessvorrichtung ist in Fig. 3 ausschnittsweise dargestellt. Die Figur zeigt einen Ausschnitt aus einer Brennkammer 125 der Gasturbine, die mit einer erfindungsgemäßen Temperaturmessvorrichtung 131 ausgestattet ist. Die übrigen Elemente der Gasturbine des zweiten Ausführungsbeispiels entsprechen denen des ersten Ausführungsbeispiels und werden daher nicht noch einmal erläutert.

Die in Fig. 3 ausschnittsweise dargestellte Gasturbine unterscheidet sich von der in Fig. 1 dargestellte Gasturbine dadurch, dass sie ein geschlossenes Kühlsystem zum Kühlen einer Brennkammerwand aufweist. In einem solchen geschlossenen Kühlsystem wird Verdichterluft durch Kühlkanäle, die entlang der inneren Brennkammerwand verlaufen, zum Brenner geleitet und von dort der Verbrennung zugeführt.

Fig. 3 zeigt in einer Schnittansicht einen Ausschnitt einer Brennkammer 125 mit einem geschlossenen Kühlsystem, die anstelle der Brennkammer 25 aus Fig. 1 in der mit Bezug auf Fig. 1 beschriebenen Gasturbine zum Einsatz kommen kann. Die Brennkammer 125 umfasst eine innere Brennkammerwand 151 und eine äußere Brennkammerwand 153. Zwischen den beiden Brennkammerwänden sind Kühlluftkanäle 155 gebildet, durch die Verdichterluft an der inneren Brennkammerwand 151 entlang zum Brenner 27 geleitet wird. Die Eintrittsöffnungen, durch die die Verdichterluft in die Kühlluftkanäle 155 eintritt, sind typischerweise in der Nähe des Brennkammerausgangs angeordnet, damit die Verdichterluft entlang eines möglichst großen Teils der inneren Brennkammerwand 151 entlang strömen kann.

In dem in Fig. 3 gezeigten Ausführungsbeispiel ist eine Temperaturmessvorrichtung 131 vorhanden, die ein in die innere Brennkammerwand 151 eingesetztes und ein wenig in das Brennkammerinnere vorstehendes, das Wärmeaufnahmeelement 133 repräsentierendes erstes Metallstück sowie ein in die äußere Brennkammerwand 153 integriertes, das Messende 137 darstellendes zweites Metallstück umfasst. Obwohl das Wärmeaufnahmeelement 133 im vorliegenden Ausführungsbeispiel ein wenig in die Brennkammer hineinragt, kann es alternativ auch mit der Innenseite der inneren Brennkammerwand 151 fluchtend ausgestaltet sein. Außerdem ist es möglich, das Wärmeaufnahmeelement 133 mit einer wärmedämmenden Beschichtung und/oder einer oxidationshemmenden Beschichtung zu versehen, wie sie häufig auch zum Schutz der Innenseite einer Brennkammerwand zur Anwendung kommt. Das Wärmeaufnahmeelement 133 ist insbesondere aus einem hochtemperaturfesten Material gefertigt. Beispiele für derartige Materialien sind bereits mit Bezug auf das erste Ausführungsbeispiel genannt worden. Auf diese Materialien wird verwiesen.

Zwischen dem ersten Metallstück 133 und dem zweiten Metallstück 137 weist die Temperaturmessvorrichtung 135 ein metallisches Wärmeleitelement 135 auf. Dieses ist vorzugsweise ebenfalls aus einem hochtemperaturfesten Material, insbesondere einen der mit Bezug auf das erste Ausführungsbeispiel genannten Materialien, hergestellt und weist im vorliegenden Ausführungsbeispiel zudem Kühlluftöffnungen 141 auf, die den Durchtritt von durch die Kühlluftkanäle 155 strömender Verdichterluft durch das Wärmeleitelement 135 ermöglichen. Die Durchgangsöffnungen 141 sind in Fig. 4 zu erkennen, in der eine Ansicht auf die Temperaturmessvorrichtung 131 entlang der Strömungsrichtung der Verdichterluft durch den Kühlluftkanal 155 gezeigt ist. Durch die Durchgangsöffnungen 141 wird die zur Wärmeübertragung an die Verdichterluft wirksame Oberfläche des Wärmeleitelementes 135 erhöht und damit die Kühlwirkung verbessert. Auf diese Weise kann trotz der im Vergleich zu dem in Fig. 1 dargestellten Ausführungsbeispiel relativ kurzen Ausdehnung des Wärmeleitelements 135 zwischen dem Wärmeaufnahmeelement 133 und dem Messende 137 eine hinreichende Abkühlung erzielt werden, so dass am Messende 137 ein üblicher Temperatursensor 39 zum Messen der Temperatur am Messende 137 Verwendung finden kann.

Statt der in Fig. 4 dargestellten Ausführungsvariante des Wärmeleitelementes 135 können auch andere Ausführungsvarianten zur Anwendung kommen, beispielsweise ein Metallgeflecht, welches von der Verdichterluft im Kühlkanal 155 durchströmt werden kann. Von Bedeutung ist lediglich, dass eine hinreichende Kühlung des Wärmeleitelementes erfolgen kann. Insbesondere kann auch in den in den Fig. 3 und 4 dargestellten Ausführungsbeispiel das Wärmeleitelement 135 einstückig mit dem Wärmeaufnahmeelement 133 und dem Messende 137 ausgebildet sein.

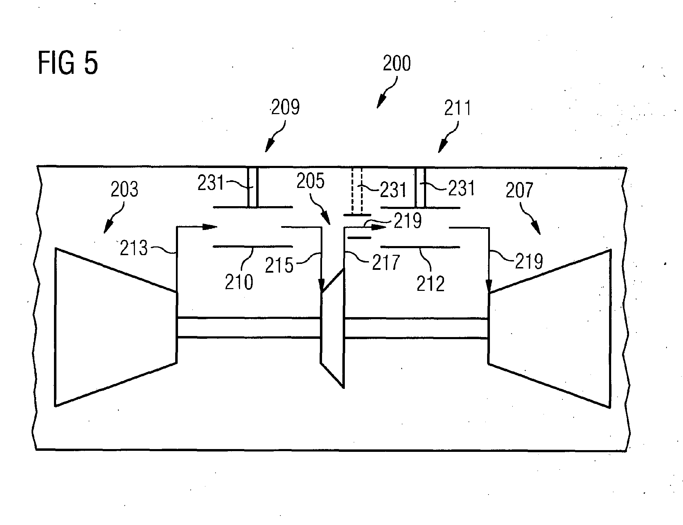

Ein drittes Ausführungsbeispiel für eine Gasturbine mit einer erfindungsgemäßen Temperaturmessvorrichtung wird nachfolgend mit Bezug auf Fig. 5 beschrieben, die ein stark vereinfachendes Schemadiagramm der Gasturbine zeigt.

Die Gasturbine gemäß dem dritten Ausführungsbeispiel umfasst einen Verdichterabschnitt 203, einen ersten Turbinenabschnitt 205 und einen zweiten Turbinenabschnitt 207. Der erste und zweite Turbinenabschnitt 205, 207 umfassen typischerweise jeweils eine oder zwei Turbinenstufen. Insbesondere der zweite Turbinenabschnitt 207 kann aber auch mehr als zwei Turbinenstufen aufweisen. Das Vorhandensein von mehr als zwei Turbinenstufen im ersten Turbinenabschnitt 205 ist jedoch ebenfalls nicht ausgeschlossen. Die in Figur 5 dargestellte Gasturbine umfasst ein Verbrennungssystem mit zwei hintereinander geschalteten Brennkammern, wobei sich zwischen dem Verdichterabschnitt 203 und dem ersten Turbinenabschnitt 205 ein erster Brennkammerabschnitt 209 mit wenigstens einer ersten Brennkammer 210 befindet. Ein zweiter Brennkammerabschnitt 211 mit wenigstens einer zweiten Brennkammer 212 ist zwischen der ersten Turbinenstufe 205 und der zweiten Turbinenstufe 207 angeordnet und über einen Strömungspfad 219 mit dem Ausgang der ersten Turbinenstufe zum Empfang der Verbrennungsgase verbunden.

Die in Figur 5 dargestellte Gasturbine ist für eine sequentielle Verbrennung ausgelegt, in der die Verdichterluft 213 der wenigstens einen ersten Brennkammer 210 zugeführt wird, wo sie mit einem Brennstoff gemischt und das Gemisch verbrannt wird. Die dabei entstehenden heißen und unter hohem Druck stehenden Abgase 215 werden dem ersten Turbinenabschnitt 205 zugeführt, wo sie unter Entspannung und Abkühlung Arbeit leisten. Die im ersten Turbinenabschnitt 205 entspannten und abgekühlten Abgase 217 werden anschließend der wenigstens einen Brennkammer 212 im zweiten Brennkammerabschnitt 211 zugeführt, wo erneut Brennstoff beigemischt wird. Das durch die Brennstoffzufuhr kalorisch wieder aufgeladene Gemisch wird erneut verbrannt, und die Verbrennungsabgase 219 werden dem zweiten Turbinenabschnitt 207 zugeführt, um dort unter Entspannung und Abkühlung Arbeit zu leisten. Der wenigstens einen Brennkammer im zweiten Brennkammerabschnitt kann zusätzlich auch Verdichterluft zugeführt werden. Eine Gastrubine mit zweistufiger Verbrennung ist beispielsweise in US 5,577,378 beschrieben. Auf diese Druckschrift wird hinsichtlich des zweistufigen Verbrennungsvorgangs verwiesen.

Bei Gasturbinen mit einer sequentiellen Verbrennung besteht die in der Einleitung beschriebene Schwierigkeit beim Ermitteln der Brennkammertemperatur aus der Temperatur am Turbinenausgang in besonderem Maße. Im Stand der Technik wird die Temperatur in der Regel am Turbinenausgang des zweiten Turbinenabschnitts 207 gemessen. Während aus dieser Temperatur noch mit einer zufriedenstellenden Genauigkeit auf die Temperatur in der wenigstens einen Brennkammer 112 im zweiten Brennkammerabschnitt 211 rückgeschlossen werden kann, ist ein quantitativer Rückschluss auf die Temperatur in der wenigstens einen Brennkammer 210 des ersten Brennkammerabschnittes 209, insbesondere auch wegen der Turbinenstufe(n) im ersten Turbineabschnitt 205, nahezu unmöglich. Dies führt zu Schwierigkeiten bei der Steuerung der Brennstoffzufuhr zu den einzelnen Brennkammerstufen und macht den Steuerungsprozess aufwändig und störanfällig.

Im vorliegenden Ausführungsbeispiel ist daher zumindest die wenigstens eine Brennkammer 210 des ersten Brennkammerabschnitts 209 mit einer Temperaturmessvorrichtung, wie sie mit Bezug auf Fig. 1 und Fig. 2 beschrieben worden ist, ausgestattet. Insbesondere kann aber auch die wenigstens eine Brennkammer 212 des zweiten Brennkammerabschnittes 211 mit einer solchen Temperaturmessvorrichtung 231 ausgestattet sein. Falls die wenigstens eine Brennkammer 210 im ersten Brennkammerabschnitt 209 und/oder die wenigstens eine Brennkammer 212 im zweiten Brennkammerabschnitt 11 mit einem geschlossenem Kühlsystem betrieben werden bzw. betrieben wird, kann auch eine Temperaturmessvorrichtung, wie sie mit Bezug auf die Figuren 3 und 4 beschrieben worden ist, zur Anwendung kommen.

Insbesondere das Vorhandensein der Temperaturmessvorrichtung 231 im ersten Brennkammerabschnitt 209 erleichtert das Steuern der Brennstoffzufuhr im sequentiellen Verbrennungsprozess, da damit die Unsicherheiten hinsichtlich der in der wenigstens einen Brennkammer 210 des ersten Brennkammerabschnitts 209 herrschenden Temperaturen beseitigt werden können.

Wie im ersten Ausführungsbeispiel kann die Wärmeabfuhr über die Wärmeleitelemente im Zuge der Inbetriebnahme der Gasturbine kalibriert werden. Wenn die Temperaturmessvorrichtungen im ersten Brennkammerabschnitt kalibriert werden, sollte hierbei im zweiten Brennkammerabschnitt kein Brennstoff zugeführt werden, um das Ergebnis nicht zu verfälschen.

In einer Abwandlung der in Fig. 5 dargestellten Ausführungsform für die erfindungsgemäße Gasturbine kann die Temperaturmessvorrichtung 231 statt der Temperatur in der Brennkammer 210 des ersten Brennkammerabschnitts 209 auch die Temperatur im Strömungspfad 219 zwischen dem Ausgang des ersten Turbinenabschnittes 205 und dem Eingang der wenigstens einen Brennkammer 212 des zweiten Brennkammerabschnittes 211 messen. Eine entsprechend angeordnete Temperaturmessvorrichtung ist in Fig. 5 gestrichelt eingezeichnet. Aus der dort gemessenen Temperatur kann dann für die Steuerung der Brennstoffzufuhr hinreichend genau auf die Temperatur in der wenigstens einen Brennkammer 210 des ersten Brennkammerabschnittes 210 geschlossen werden.

Der Vorteil der Anordnung der Temperaturmessvorrichtung 231 im Strömungspfad 219 zwischen dem Ausgang des ersten Turbinenabschnittes 205 und dem Eingang der wenigstens einen Brennkammer 212 im zweiten Brennkammerabschnitt 211 ist, dass dort lediglich Temperaturen auf einem Temperaturniveau von unter 1.200°C herrschen, wohingegen in der wenigstens einen Brennkammer 210 des ersten Brennkammerabschnittes 209 Temperaturen von ca. 1.500°C herrschen. Die Anordnung der Temperaturmessvorrichtung 231 im Strömungspfad 219 zwischen dem Ausgang des ersten Turbinenabschnittes 205 und der wenigstens einen Brennkammer 212 des zweiten Brennkammerabschnittes 211 ermöglicht es daher, die an die Temperaturfestigkeit der zum Herstellen der Temperaturmessvorrichtung 231 verwendeten Materialien zu reduzieren und somit die Herstellung der Temperaturmessvorrichtung 231 kostengünstiger zu gestalten.

Die erfindungsgemäße Temperaturmessvorrichtung und das erfindungsgemäße Verfahren ermöglichen unter anderem ein Verbessern der Brennstoffmengenregelung, insbesondere bei Gasturbinen mit sequentieller Verbrennung, bei denen es die direkte Bestimmung der Temperatur in der Brennkammer im ersten Brennkammerabschnitt überhaupt erst möglich macht, sich ein Bild von den dort herrschenden Temperaturen zu machen.

Es sei an dieser Stelle darauf hingewiesen, dass in den Ausführungsbeispielen zwar jeweils nur eine Temperaturmessvorrichtung je Brennkammer beschrieben ist, die Anzahl der Temperaturmessvorrichtungen je Brennkammer jedoch auch mehr als eins betragen kann. Insbesondere kann die erfindungsgemäße Temperaturmessvorrichtung bei Brennkammern mit mehr als einem Brenner, beispielsweise bei Ringbrennkammern, auch zur Überwachung der Funktion der einzelnen Brenner herangezogen werden. Je nach Anordnung und Anzahl der Brenner in der Brennkammer sind erfindungsgemäße Temperaturmessvorrichtungen dann entsprechend in der Brennkammer zu platzieren. Beispielsweise ermöglicht eine Verteilung der Temperaturmessvorrichtungen in Umfangsrichtung der Brennkammer eine in der Brennkammer festgestellte ungleichmäßige Temperaturverteilung auf einen oder mehrere bestimmte Brenner zurückzuführen und der ungleichmäßigen Temperaturverteilung durch gezieltes Einwirken auf diese bzw. diesen Brenner entgegen zu wirken.

## Patentansprüche

1. Temperaturmessvorrichtung (31, 131, 231) zum Messen der Temperatur in einem Verbrennungssystem (25, 125, 210, 212, 219), insbesondere in einem Verbrennungssystem einer Gasturbine, mit
- einem in oder an dem Verbrennungssystem (25, 125, 210, 212, 219) angeordneten Wärmeaufnahmeelement (33, 133),
- einem von dem Verbrennungssystem (25, 125, 210, 212, 219) entfernt angeordneten Messende (37, 137) mit daran angeordnetem, die Temperatur des Messendes (37, 137) erfassenden Temperatursensor (39),
- einem Wärmeleitelement (35, 135), welches das Wärmeaufnahmeelement (33, 133) thermisch leitend mit dem Messende (37, 137) verbindet, und
- einer auf das Wärmeleitelement (35, 135) zur Wärmeabfuhr quantifizierbar einwirkenden Kühleinrichtung (23, 153).

2. Temperaturmessvorrichtung nach Anspruch 1, in der, wenigstens ein weiterer die Temperatur des Wärmeleitelements (35) erfassender Temperatursensor (43) am Wärmeleitelement (35) angeordnet ist.

3. Temperaturmessvorrichtung (31, 131, 231) nach Anspruch 1 oder Anspruch 2, in der die Kühleinrichtung einen Kühlfluidkanal (23, 155) aufweist, in dem das Wärmeleitelement (35, 135) angeordnet ist.

4. Temperaturmessvorrichtung (31, 131, 231) nach Anspruch 3, in der das Wärmeleitelement (35, 135) eine Geometrie mit großer Oberfläche aufweist oder mit einem eine große Oberfläche aufweisenden Element thermisch leitend in Verbindung steht.

5. Temperaturmessvorrichtung (31) nach einem der vorangehenden Ansprüche, in dem das Wärmeaufnahmeelement (33) eine Fläche oder ein Abschnitt des Wärmeleitelements (35) ist.

6. Temperaturmessvorrichtung (31, 131, 231) nach einem der vorangehenden Ansprüche, in dem das Wärmeaufnahmeelement (33, 133) eine definiert wärmedämmende und/oder eine oxidationshemmende Beschichtung aufweist.

7. Temperaturmessvorrichtung (31, 131, 231) nach einem der vorangehenden Ansprüche, in der das Wärmeleitelement (35, 135) und/oder das Wärmeaufnahmeelement (33, 133) aus einem hochtemperaturfesten Material besteht bzw. bestehen.

8. Gasturbine (1, 200) mit wenigstens einem Verbrennungssystem (25, 123, 210, 212, 219), welches mit wenigstens einer Temperaturmessvorrichtung (31, 131, 231) nach einem der Ansprüche 1 bis 7 ausgestattet ist.

9. Gasturbine (1, 200) nach Anspruch 8, in der das Wärmeleitelement (35, 135) der Temperaturmessvorrichtung (31, 131, 231) wenigstens teilweise in einem das Verbrennungssystem (25, 123, 210, 212, 219) wenigstens teilweise umgebenden Kühlfluid führenden Bereich (23, 155) angeordnet ist.

10. Gasturbine (200) nach Anspruch 8 oder Anspruch 9 mit wenigstens einem Verbrennungssystem (25, 123, 210, 212, 219), das wenigstens zwei axial hintereinander angeordnete und sequentiell durchströmte Brennkammern (210, 212) umfasst, von denen wenigstens die stromaufwärts gelegene Brennkammer (210) mit wenigstens einer Temperaturmessvorrichtung (231) nach einem der Ansprüche 1 bis 7 ausgestattet ist.

11. Gasturbine (200) nach Anspruch 10, in der alle Brennkammern (210, 212) jeweils mit wenigstens einer Temperaturmessvorrichtung (231) nach einem der Ansprüche 1 bis 7 ausgestattet sind.

12. Gasturbine (200) nach Anspruch 10 oder Anspruch 11, in der zwischen den beiden axial hintereinander angeordneten Brennkammern (210, 212) wenigstens eine Turbinenstufe (205) angeordnet ist.

13. Gasturbine nach einem der Ansprüche 8 bis 12, mit wenigstens zwei axial hintereinander angeordneten und sequentiell durchströmten Brennkammern (210, 212), zwischen denen wenigstens ein Strömungspfad (219) vorhanden ist, wobei im Strömungspfad (219) eine Temperaturmessvorrichtung (231) nach einem der Ansprüche 1 bis 7 vorhanden ist.

14. Verfahren zum direkten Bestimmen der Temperatur in einem Verbrennungssystem (25, 125, 210, 212, 219), insbesondere in einer Gasturbinenbrennkammer, in dem eine Wärmemenge aus dem Verbrennungssystem (25, 125, 210, 212, 219) aufgenommen wird, die aufgenommene Wärmemenge an einen von dem Verbrennungssystem (25, 125, 210, 212, 219) entfernt angeordneten Temperatursensor (39) weitergeleitet wird, wobei während des Weiterleitens Wärme quantifizierbar aus der Wärmemenge abgeführt wird, so dass die am Temperatursensor (39) ankommende Wärmemenge um einen quantifizierbaren Betrag gegenüber der aufgenommenen Wärmemenge vermindert ist, die eigentliche Temperaturmessung auf der Basis der verminderten Wärmemenge erfolgt und die Temperatur in dem Verbrennungssystem (25, 125, 210, 212, 219) aus der eigentlichen Temperaturmessung und der Menge der quantifizierbar abgeführten Wärme ermittelt wird.

15. Verfahren nach Anspruch 14, in dem das quantifizierbare Abführen der Wärme mittels eines Kühlfluidstroms erfolgt.

## Claims

1. Temperature measuring device (31, 131, 231) for measuring the temperature in a combustion system (25, 125, 210, 212, 219), in particular in a combustion system of a gas turbine, comprising
- a heat-absorbing element (33, 133) disposed in or on the combustion system (25, 125, 210, 212, 219),
- a measurement end (37, 137) disposed remotely from the combustion system (25, 125, 210, 212, 219) and having, disposed thereon, a temperature sensor (39) measuring the temperature of said measurement end (37, 137),
- a heat-conducting element (35, 135) which connects the heat-absorbing element (33, 133) to the measurement end (37, 137) in a thermally conductive manner, and
- a cooling device (23, 153) acting on the heat-conducting element (35, 135) in a quantifiable manner for heat removal.

2. Temperature measuring device according to claim 1, in which at least one additional temperature sensor (43) measuring the temperature of the heat-conducting element (35) is disposed on the heat-conducting element (35).

3. Temperature measuring device (31, 131, 231) according to claim 1 or claim 2, in which the cooling device has a cooling fluid duct (23, 155) in which the heat-conducting element (35, 135) is disposed.

4. Temperature measuring device (31, 131, 231) according to claim 3, in which the heat-conducting element (35, 135) has a large surface area geometry or is connected in a thermally conductive manner to an element having a large surface area.

5. Temperature measuring device (31) according to one of the preceding claims, in which the heat-absorbing element (33) is a surface or a section of the heat-conducting element (35).

6. Temperature measuring device (31, 131, 231) according to one of the preceding claims, in which the heat-absorbing element (33, 133) has a coating with defined heat-insulating and/or anti-oxidation properties.

7. Temperature measuring device (31, 131, 231) according to one of the preceding claims, in which the heat-conducting element (35, 135) and/or the heat-absorbing element (33, 133) is/are made of a high-temperature material.

8. Gas turbine (1, 200) with at least one combustion system (25, 123, 210, 212, 219) which is equipped with at least one temperature measuring device (31, 131, 231) according to one of claims 1 to 7.

9. Gas turbine (1, 200) according to claim 8, in which the heat-conducting element (35, 135) of the temperature measuring device (31, 131, 231) is disposed at least partly in a cooling fluid circulating area (23, 155) at least partially surrounding the combustion system (25, 123, 210, 212, 219).

10. Gas turbine (200) according to claim 8 or claim 9, having at least one combustion system (25, 123, 210, 212, 219) comprising at least two combustion chambers (210, 212) disposed axially in series and flowed through sequentially, of which at least the upstream combustion chamber (210) is equipped with at least one temperature measuring device (231) according to one of claims 1 to 7.

11. Gas turbine (200) according to claim 10, in which all combustion chambers (210, 212) are each equipped with at least one temperature measuring device (231) according to one of claims 1 to 7.

12. Gas turbine (200) according to claim 10 or claim 11, in which at least one turbine stage (205) is disposed between the two combustion chambers (210, 212) disposed axially in series.

13. Gas turbine according to one of claims 8 to 12, having at least two combustion chambers (210, 212) disposed axially in series and flowed through sequentially, between which at least one flow path (219) is present, a temperature measuring device (231) according to one of claims 1 to 7 being provided in said flow path (219).

14. Method for directly determining the temperature in a combustion system (25, 125, 210, 212, 219), in particular in a gas turbine combustion chamber in which a quantity of heat from the combustion system (25, 125, 210, 212, 219) is absorbed, the quantity of heat absorbed is transmitted to a temperature sensor (39) disposed remotely from the combustion system (25, 125, 210, 212, 219), wherein, during transmission, heat is quantifiably removed from the quantity of heat so that the quantity of heat reaching the temperature sensor (39) is reduced by a quantifiable amount compared to the quantity of heat absorbed, the actual temperature measurement takes place on the basis of the reduced quantity of heat and the temperature in the combustion system (25, 125, 210, 212, 219) is determined from the actual temperature measurement and the quantity of quantifiably removed heat.

15. Method according to claim 14, in which the heat is quantifiably removed by means of a cooling fluid flow.

## Revendications

1. Dispositif ( 31, 131, 231 ) de mesure de la température dans un système ( 25, 125, 210, 212, 219 ) de combustion, notamment dans un système de combustion d'une turbine à gaz, comprenant :
- un élément ( 33, 133 ) d'absorption de la chaleur monté dans ou sur le système ( 25, 125, 210, 212, 219 ) de combustion,
- une extrémité ( 37, 137 ) de mesure, qui est éloignée du système ( 25, 125, 210, 212, 219 ) de combustion et sur laquelle est monté un capteur ( 39 ) de température, détectant la température de l'extrémité ( 37, 137 ) de mesure,
- un élément ( 35, 135 ) conduisant la chaleur, qui relie d'une manière conductrice thermiquement l'élément ( 33, 133 ) d'absorption de la chaleur à l'extrémité ( 37, 137 ) de mesure et
- un dispositif ( 23, 153 ) de refroidissement agissant d'une manière quantifiable sur l'élément ( 35, 135 ) de conduite de la chaleur pour l'évacuation de la chaleur.

2. Dispositif de mesure de la température suivant la revendication 1, dans lequel au moins un autre capteur ( 43 ) de température, détectant la température de l'élément ( 35 ) de conduite de la chaleur, est monté sur l'élément ( 35 ) de conduite de la chaleur.

3. Dispositif ( 31, 131, 231 ) de mesure de la température suivant la revendication 1 ou la revendication 2, dans lequel le dispositif de refroidissement a un canal ( 23, 155 ) pour du fluide de refroidissement, dans lequel est disposé l'élément ( 35, 135 ) de conduite de la chaleur.

4. Dispositif ( 31, 131, 231 ) de mesure de la température suivant la revendication 3, dans lequel l'élément ( 35, 135 ) de conduite de la chaleur a une géométrie ayant une grande surface ou est en liaison conductrice thermiquement avec un élément ayant une grande surface.

5. Dispositif ( 31 ) suivant l'une des revendications précédentes, dans lequel l'élément ( 33 ) d'absorption de la chaleur est une surface ou un tronçon de l'élément ( 35 ) de conduite de la chaleur.

6. Dispositif ( 31, 131, 231 ) de mesure de la température suivant l'une des revendications précédentes, dans lequel l'élément ( 33, 133 ) d'absorption de la chaleur a un revêtement calorifuge d'une manière définie et/ou inhibant l'oxydation.

7. Dispositif ( 31, 131, 231 ) de mesure de la température suivant l'une des revendications précédentes, dans lequel l'élément ( 35, 135 ) de conduite de la chaleur et/ou l'élément ( 33, 133 ) d'absorption de la chaleur est ou sont en un matériau résistant à des températures hautes.

8. Turbine ( 1, 200 ) à gaz ayant au moins un système ( 25, 123, 210, 212, 219 ) de combustion, qui est équipé d'au moins un dispositif ( 31, 131, 231 ) de mesure de la température suivant l'une des revendications 1 à 7.

9. Turbine ( 1, 200 ) à gaz suivant la revendication 8, dans laquelle l'élément ( 35, 135 ) de conduite de la chaleur du dispositif ( 31, 131, 231 ) de mesure de la température est disposé, au moins en partie, dans une zone ( 23, 135 ) conduisant du fluide de refroidissement et entourant au moins en partie le système ( 25, 123, 210, 212, 219 ) de combustion.

10. Turbine ( 200 ) à gaz suivant la revendication 8 ou la revendication 9 ayant au moins un système ( 25, 123, 210, 212, 219 ) de combustion, qui comprend au moins deux chambres de combustion ( 210, 212 ) disposées l'une derrière l'autre axialement et parcourues séquentiellement, dont au moins la chambre de combustion ( 210 ) en amont est équipée d'au moins un dispositif ( 231 ) de mesure de la température suivant l'une des revendications 1 à 7.

11. Turbine ( 200 ) à gaz suivant la revendication 10, dans laquelle toutes les chambres de combustion ( 210, 212 ) sont équipées respectivement d'au moins un dispositif ( 231 ) de mesure de la température suivant l'une des revendications 1 à 7.

12. Turbine ( 200 ) à gaz suivant la revendication 10 ou la revendication 11, dans laquelle au moins un étage ( 205 ) de turbine est disposé entre les deux chambres de combustion ( 210, 212 ) disposées l'une derrière l'autre axialement.

13. Turbine à gaz suivant l'une des revendications 8 à 12, ayant au moins deux chambres de combustion ( 210, 212 ) disposées l'une derrière l'autre axialement et parcourues séquentiellement, entre lesquelles il y a au moins un trajet ( 219 ) d'écoulement, un dispositif ( 231 ) de mesure de la température suivant l'une des revendications 1 à 7 étant présent dans le trajet ( 219 ) d'écoulement.

14. Procédé de détermination directe de la température dans un système ( 25, 125, 210, 212, 219 ) de combustion, notamment dans une chambre de combustion d'une turbine à gaz, dans lequel on absorbe une quantité de chaleur du système ( 25, 125, 210, 212, 219 ) de combustion, on achemine la quantité de chaleur absorbée vers un capteur ( 39 ) de température éloigné du système ( 25, 125, 210, 212, 219 ) de combustion, dans lequel, pendant l'acheminement, on évacue d'une manière quantifiable de la chaleur de la quantité de chaleur de manière à diminuer la quantité de chaleur arrivant au capteur ( 39 ) de température d'un montant quantifiable par rapport à la quantité de chaleur absorbée, on effectue la mesure proprement dite de la température sur la base de la quantité de chaleur diminuée et on détermine la température dans le système ( 25, 125, 210, 212, 219 ) de combustion à partir de la mesure de température proprement dite et de la quantité de la chaleur évacuée de manière quantifiable.

15. Procédé suivant la revendication 14, dans lequel on effectue l'évacuation quantifiable de la chaleur au moyen d'un courant de fluide de refroidissement.
